# EUROPÄISCHE PATENTSCHRIFT

(11) **EP 2 846 902 B1**
(45) Veröffentlichungstag und Bekanntmachung des Hinweises auf die Patenterteilung: **14.09.2016**
(21) Anmeldenummer: 13724754.0
(22) Anmeldetag: 07.05.2013
(51) Int. Cl.: B01F 7/02, B01F 15/00, B01F 15/02

(54) **VERFAHREN ZUM BETRIEB EINES APPARATES MIT MINDESTENS EINER ROTIERENDEN WELLE**
METHOD FOR OPERATING A DEVICE COMPRISING AT LEAST ONE ROTATING SHAFT
PROCÉDÉ PERMETTANT DE FAIRE FONCTIONNER UN APPAREIL COMPRENANT AU MOINS UN ARBRE ROTATIF

(30) Priorität: 08.05.2012 US 201261643916 P
(43) Veröffentlichungstag der Anmeldung: 18.03.2015
(73) Patentinhaber: BASF SE, 67056 Ludwigshafen am Rhein (DE)
(72) Erfinder: STEPHAN, Oskar, 68766 Hockenheim (DE); PETERSON, Monte, Perland, Texas 77584 (US)
(74) Vertreter: BASF IP Association
(86) Internationale Anmeldenummer: PCT/EP2013/059435
(87) Internationale Veröffentlichungsnummer: WO 2013/167561

(56) Entgegenhaltungen:
- EP-A1- 1 462 473
- EP-A2- 1 800 740
- WO-A1-2006/034806
- WO-A1-2006/034853
- WO-A1-2011/024974
- DE-C1- 3 310 484
- GB-A- 1 104 827
- US-A- 3 472 491
- US-A- 4 931 212
- US-A1- 2007 149 691
- US-A1- 2007 260 357
- US-A1- 2012 091 392
- US-B2- 6 987 151

## Beschreibung

Die Erfindung geht aus von einem Verfahren zum Betrieb eines Apparates mit mindestens einer rotierenden Welle, wobei die mindestens eine rotierende Welle Funktionselemente aufweist, die auf in dem Apparat zu verarbeitendes Material einwirken, wobei der Apparat eine Einfüllöffnung und eine Auslassöffnung mit einer einstellbaren Unterkante aufweist und Material kontinuierlich durch den Apparat von der Einfüllöffnung zur Auslassöffnung gefördert wird.

Apparate mit mindestens einer rotierenden Welle sind zum Beispiel Reaktoren, insbesondere Knetreaktoren, Kneter, Scheibentrockner oder Schaufeltrockner. Knetreaktoren und Schaufeltrockner finden zum Beispiel Einsatz bei der Herstellung von als Superabsorber eingesetzten Poly(meth)acrylaten. Jedoch können solche Kneter oder Trockner auch in jedem beliebigen anderen Verfahren Einsatz finden.

Je nach Art der auf der Welle aufgebrachten Funktionselemente, beispielsweise Knethaken, Schaufeln oder Scheiben und dem im Apparat zu behandelnden Produkt wirken Kräfte auf die Funktionselemente. Insbesondere bei pulverförmigen oder granularen Feststoffen oder hochviskosen Flüssigkeiten sind diese Kräfte vergleichsweise hoch. Dies kann dazu führen, dass die Funktionselemente aufgrund zu großer Kräfte geschädigt werden, was bis zum Abbrechen der Funktionselemente führen kann. Abgebrochene Funktionselemente ziehen weitere Schäden nach sich, die sogar zum Ausfall des Apparates führen können.

Die Kräfte, die auf die Funktionselemente wirken, sind dabei neben der Art des Materials und der Art der Funktionselemente auch von der Füllhöhe im Apparat abhängig. Je größer die Füllhöhe ist, umso größer sind die auf die Funktionselemente wirkenden Kräfte. Die Füllhöhe im Apparat ergibt sich im Allgemeinen aus der Drehzahl der Welle, der Menge an Edukten, die in den Apparat eingefüllt werden und der Menge der Edukte, die aus dem Apparat entnommen werden. Zur Zugabe ist üblicherweise eine Einfüllöffnung vorgesehen, die beispielsweise oberhalb der Welle im Gehäuse des Apparates angeordnet ist. Die Entnahme des Produktes erfolgt im Allgemeinen durch eine Entnahmeöffnung, die beispielsweise in Form eines Wehrs gestaltet sein kann. Das Dokument GB-A-1104827 offenbart ein Verfahren zum Betrieb eines Mischers, bei dem Belastungsdaten einer rotierenden Welle erfasst werden und eine Auslassöffnung durch eine Steuerung geöffnet wird.

Ein Mischkneter mit einer rotierenden Welle mit darauf eingebrachten Knetbarren als Funktionselemente, einer Einfüllöffnung zur Zugabe von Edukten und eine Entnahmeöffnung zur Entnahme des Produkts ist beispielsweise in WO2006/034853 offenbart. Der hier offenbarte Apparat wird eingesetzt zur Herstellung von Poly(meth)acrylaten.

Problematisch bei den derzeit eingesetzten Mischknetern ist, dass diese üblicherweise mit einer konstanten Eduktzufuhr betrieben werden, was insbesondere bei einer ungleichmäßigen Reaktion, wenn im Knetapparat eine Reaktion durchgeführt wird, dazu führen kann, dass die Belastung auf die Welle schwanken kann. Entsprechend können auch Schwankungen in der Trocknung bei einem Trockner zu unterschiedlicher Wellenbelastung führen.

Aufgabe der vorliegenden Erfindung ist es daher, ein Verfahren zum Betrieb eines Apparates mit mindestens einer rotierenden Welle bereitzustellen, bei dem die Belastung der Welle so eingestellt werden kann, dass Schädigungen der Welle vermieden werden können.

Gelöst wird die Aufgabe durch ein Verfahren zum Betrieb eines Apparates mit mindestens einer rotierenden Welle gemäß dem Anspruch 1.

Durch das Absenken der Unterkante der Auslassöffnung, wenn die Wellenbelastung eine vorgegebene Maximalbelastung überschreitet, wird die maximale Füllhöhe im Apparat ebenfalls reduziert, da das Material, das oberhalb der Unterkante der Auslassöffnung im Apparat enthalten ist, aus dem Apparat entnommen wird. Derselbe Effekt wird durch eine Reduzierung der Menge an zugeführtem Material erzielt. Die geringere Füllhöhe führt zu einer geringeren Belastung der Welle, so dass auf diese Weise eine zu hohe Wellenbelastung reduziert werden kann und Wellenschädigungen vermieden oder zumindest reduziert werden können. Bei einer Unterschreitung einer vorgegebenen Wellenbelastung ist es möglich, die Unterkante der Auslassöffnung nach oben zu verschieben, wodurch die Füllhöhe insgesamt vergrößert wird. Die Vergrößerung der Füllhöhe kann alternativ auch durch eine Erhöhung der Menge an zugeführtem Material erreicht werden. Hierdurch lässt sich neben der Vermeidung von Wellenschädigungen auch jeweils die maximal mögliche Füllhöhe einstellen und so der maximal mögliche Durchsatz durch den Apparat realisieren.

Durch Absenken bzw. Anheben der Unterkante der Auslassöffnung lässt sich die Einstellung der Füllhöhe auch bei konstant bleibender Zugabe von Material in den Apparat einstellen.

In einer bevorzugten Ausführungsform wird die Unterkante der Auslassöffnung durch ein verschiebbares Wehr gebildet und zum Absenken der Unterkante der Auslassöffnung wird das Wehr nach unten bewegt und zur Verschiebung der Unterkante der Auslassöffnung nach oben wird das Wehr nach oben bewegt. Die mit einem einstellbaren Wehr ausgestattete Auslassöffnung kann dabei an einer Stirnseite des Apparates oder seitlich am Apparat angeordnet sein. Vorzugsweise befindet sich die Auslassöffnung auf der der Einfüllöffnung in axialer Richtung entgegengesetzten Seite des Apparates.

Das Gehäuse des Apparates ist üblicherweise zylindrisch, um die Funktion gewährleisten zu können. Die Stirnseiten können dabei flach oder gewölbt ausgeführt sein. Hierbei ist die Form der Stirnflächen auch davon abhängig, wie groß der Druck im Apparat ist. Im Falle des Betriebs des Apparates unter Druck sind die Abdeckungen zum Beispiel mit einer Wölbung ausgestattet.

Das Wehr, mit dem die Auslassöffnung an ihrer Unterkante ausgestattet ist, ist dabei üblicherweise in der gleichen Geometrie gestaltet wie das das Wehr umgebende Gehäuse. Bei einem seitlich am Gehäuse angebrachten Wehr ist das Wehr zum Beispiel ebenfalls gebogen, so dass dieses im Inneren des Gehäuses oder außen am Gehäuse verschoben werden kann. Hierzu ist es zum Beispiel möglich, Führungsschienen am Gehäuse vorzusehen, in denen das Wehr verschoben wird. Bei einer Position des Wehres an einer Stirnfläche des Apparates ist es zum Beispiel möglich, das Wehr als ebene Platte zu gestalten, wenn der die Stirnseite abschließende Deckel ebenfalls eine ebene Fläche bildet.

Um zu verhindern, dass Material seitlich des Wehres aus dem Apparat austreten kann, ist es weiterhin vorteilhaft, wenn das Wehr gegenüber dem Apparat abgedichtet ist. Hierbei ist jede beliebige Dichtung einsetzbar, die ein Verschieben des Wehres nicht behindert.

Wenn das im Apparat behandelte Material grobkörnig ist, ist eine Abdichtung gegebenenfalls nicht notwendig, da das Material auch durch enge Spalte nicht aus dem Apparat austreten kann. Insbesondere bei Behandlung von Feststoffen im Apparat ist eine Abdichtung nicht zwingend erforderlich. Wenn im Apparat jedoch eine Flüssigkeit verarbeitet wird, ist in Abhängigkeit von der Viskosität eine Abdichtung unumgänglich. Insbesondere bei niedriger viskosen Flüssigkeiten muss eine Abdichtung vorgesehen sein, um zu vermeiden, dass die Flüssigkeit durch Spalte, die vom Wehr gebildet werden, aus dem Apparat austreten kann.

Da das erfindungsgemäße Verfahren insbesondere bei hochviskosen oder festen Materialien eingesetzt wird, kann im Allgemeinen auf eine Abdichtung des Wehres verzichtet werden.

Da die Belastung der Welle von einer großen Anzahl an Parametern abhängig ist, ist es erforderlich, die Belastung der Welle zu erfassen. Hierzu werden in Schritt (a) Belastungsdaten der mindestens einen rotierenden Welle zur Bestimmung der Wellenbelastung gemessen. Die Belastungsdaten, die gemessen werden, sind die Drehzahl der Welle, die Motorleistung zum Antrieb der Welle und Durchbiegungswerte der Welle.

Bei einer Zunahme der Wellenbelastung nimmt zum Beispiel die Drehzahl der Welle ab. Aufgrund der größeren Belastung der Welle, d.h. der größeren Kraft, die von der Welle ausgeübt werden muss, beispielsweise bei einem höheren Füllstand oder auch bei einer stärkeren Vernetzung, beispielsweise bei der Herstellung von vernetzten Polymeren, und damit einer höheren Viskosität werden größere Kräfte auf die Funktionselemente übertragen und die Welle wird hierdurch verlangsamt. Um die Umfangsgeschwindigkeit der Welle konstant zu halten, ist es daher notwendig, die Antriebsleistung zu steigern. Daher ist auch die Aufnahme der Antriebsleistung zur Bestimmung der Wellenbelastung möglich. Eine vergrößerte Motorleistung zum Antrieb der Welle, um die Drehzahl konstant zu halten, deutet auf eine höhere Wellenbelastung hin. Eine erhöhte Belastung der Welle kann zudem auch zu einer verstärkten Durchbiegung der Welle führen, so dass zur Bestimmung der Belastung der Welle auch die Durchbiegungswerte der Welle aufgenommen werden können.

Wenn die Drehzahl der Welle erfasst werden soll, so eignet sich hierzu jeder beliebige, dem Fachmann bekannte Drehzahlsensor. Der Drehzahlsensor wird dabei vorzugsweise an der Welle außerhalb des Gehäuses angebracht. Hierbei ist es möglich, den Drehzahlsensor entweder auf der Antriebsseite der Welle oder auf der dem Antrieb abgewandten Seite der Welle anzuordnen. Die Anordnung des Drehzahlsensors außerhalb des Gehäuses hat den Vorteil, dass der Drehzahlsensor in diesem Fall nicht von dem im Apparat enthaltenen Material beeinträchtigt wird. Neben einer Positionierung des Drehzahlsensors an einem der Wellenenden ist es alternativ auch möglich, insbesondere bei Einsatz einer Hohlwelle, den Drehzahlsensor im Inneren der Welle anzubringen. In diesem Fall ist eine Wellendurchführung erforderlich, durch die der Drehzahlsensor ins Innere der Welle eingebracht wird. Bevorzugt ist jedoch eine Anordnung des Drehzahlsensors außen an der Welle an einem der Wellenenden.

Wenn die Motorleistung zum Antrieb der Welle erfasst werden soll, so kann auch hier jeder beliebige Sensor genutzt werden, mit dem die Motorleistung erfasst werden kann. Hierzu ist es insbesondere möglich, direkt am Antrieb der Welle die aufgenommene Leistung zu erfassen. Die Motorleistung kann dabei zum Beispiel durch Erfassen der Spannung und der Stromstärke aufgenommen und berechnet werden.

Wenn die Drehzahl erfasst wird, ist neben dem Erfassen der Drehzahl der Welle auch möglich, die Drehzahl des Motors aufzunehmen. Hierzu kann zum Beispiel ein im Motor vorgesehener Drehzahlsensor eingesetzt werden. Bei einer Verlangsamung der Drehzahl der Welle nimmt auch die Drehzahl des Motors ab. Die Drehzahl von Welle und Motor sind direkt miteinander gekoppelt.

Um die Durchbiegung der Welle zu erfassen, können ebenfalls beliebige, dem Fachmann bekannte Sensoren eingesetzt werden, die eine Erfassung der Durchbiegung ermöglichen. Hierzu ist es zum Beispiel möglich, Sensoren einzusetzen, mit denen an einem der Wellenenden eine Erfassung der Abweichung der Welle von der axialen Position möglich ist. Gemäß der Erfindung, wird zur Bestimmung der Durchbiegungswerte der Abstand zwischen den Wellenenden bestimmt und aus einer Änderung des Abstandes die Durchbiegung der Welle bestimmt. Bei einer Durchbiegung der Welle nimmt auf einer Seite der Abstand zwischen den Wellenenden zu und auf der anderen Seite nimmt der Abstand der Wellenenden zueinander ab. Aus dem Abstand der Wellenenden lässt sich so auf einfache Weise die Durchbiegung bestimmen.

Zur Durchführung des Verfahrens ist vorzugsweise eine Steuereinheit vorgesehen. Die Steuereinheit kann jede beliebige computerprogrammierbare Steuereinheit sein, die sich zum Steuern eines Apparates eignet. Beispielsweise ist eine solche Steuereinheit ein Personal Computer.

Die Steuereinheit ist vorzugsweise so ausgebildet, dass dieser die Belastungsdaten zugeführt werden können. In der Steuereinheit werden die Belastungsdaten mit der vorgegebenen Maximalbelastung verglichen und bei einem Überschreiten der Maximalbelastung wird durch die Steuereinheit veranlasst, dass die Unterkante der Auslassöffnung nach unten verschoben wird und/oder die Menge an zugeführtem Material reduziert wird. Wenn die Wellenbelastung unterhalb der Maximalbelastung liegt, kann die Unterkante der Auslassöffnung nach oben verschoben werden, um einen maximal möglichen Durchsatz zu erhalten. Alternativ ist es hier auch möglich, die Menge an zugeführtem Material zu erhöhen. Zum Verschieben der Auslassöffnung kann ein die Auslassöffnung begrenzendes Wehr zum Beispiel mit einer Stelleinheit, beispielsweise einem Stellmotor angetrieben werden. Die Steuereinheit sendet entsprechende Signale an die Stelleinheit, die ein Verschieben der Unterkante der Auslassöffnung in die jeweils entsprechende Richtung veranlasst.

Um zu vermeiden, dass die Unterkante der Auslassöffnung ununterbrochen wechselweise nach oben und nach unten verschoben wird, weil die Maximalbelastung der Welle überschritten bzw. unterschritten wird, ist es weiterhin vorteilhaft, zusätzlich eine Minimalbelastung vorzusehen, bei deren Unterschreiten begonnen wird, die Unterkante der Auslassöffnung nach oben zu verschieben. So lange weder die Maximalbelastung überschritten wird, noch die Minimalbelastung unterschritten wird, kann die Unterkante der Auslassöffnung in ihrer Position verbleiben. Entsprechend wird alternativ in diesem Fall die Menge an zugeführtem Material nicht verändert. Wenn zum Beispiel die Drehzahl der Welle erfasst wird, so stellt die Maximalbelastung die minimale Drehzahl der Welle und die Minimalbelastung die maximale Drehzahl der Welle dar. Bei einem Unterschreiten der minimalen Drehzahl der Welle wird die Maximalbelastung der Welle erreicht und die Unterkante der Auslassöffnung wird nach unten verschoben. Bei einem Überschreiten der maximal vorgegebenen Drehzahl wird die Minimalbelastung erreicht und die Unterkante des Wehres kann wieder nach oben verschoben werden.

Entsprechend wird beim Erfassen der Motorleistung zum Antrieb der Welle bei einem Überschreiten einer maximal vorgegebenen Motorleistung die Maximalbelastung überschritten und die Unterkante der Auslassöffnung muss nach unten verschoben werden und/oder die Menge an zugeführtem Material reduziert werden. Beim Unterschreiten einer vorgegebenen Minimalleistung des Motors wird entsprechend die Unterkante der Auslassöffnung wieder nach oben verschoben und/oder die Menge an zugeführtem Material erhöht, da in diesem Fall die Minimalbelastung unterschritten worden ist.

Weiterhin wird beim Erfassen der Durchbiegung der Welle eine maximale Durchbiegung vorgegeben. Beim Überschreiten der maximal vorgegebenen Durchbiegung wird auch in diesem Fall die Maximalbelastung überschritten, so dass die Unterkante des Wehres nach unten verschoben wird und/oder die Menge an zugeführtem Material reduziert. Zusätzlich kann eine minimale Durchbiegung vorgegeben werden, bei deren Unterschreiten die Minimalbelastung der Welle unterschritten wird und in diesem Fall die Unterkante der Auslassöffnung nach oben verschoben wird und/oder die Menge an zugeführtem Material erhöht wird.

Es ist zum Beispiel möglich, für jede einzelne Art von Belastungsdaten, beispielsweise wie vorstehend erwähnt für die Durchbiegung der Welle, die Motorleistung und die Drehzahl der Welle separate Maximalwerte und Minimalwerte vorzugeben, wobei jeweils beim Überschreiten bzw. Unterschreiten eines der Werte wie vorstehend beschrieben die Unterkante der Auslassöffnung verschoben wird. Alternativ ist es jedoch auch möglich, die gemessenen Belastungsdaten in diesem Fall zu einer Kenngröße zusammenzufassen. Ein geeigneter Algorithmus zur Bildung der Kenngröße wäre in diesem Fall zum Beispiel durch geeignete Versuche zu ermitteln.

Die Kenngröße wird dabei so ermittelt, dass diese die Wellenbelastung darstellt. Beim Überschreiten der maximal vorgegebenen Wellenbelastung wird dann wieder die Unterkante des Wehres nach unten verschoben und/oder die Menge an zugeführtem Material reduziert und beim Unterschreiten einer minimalen Wellenbelastung die Unterkante des Wehres nach oben verschoben und/oder die Menge an zugeführtem Material erhöht.

In einer Ausführungsform der Erfindung sind die Maximalbelastung und gegebenenfalls die Minimalbelastung der Welle in einem beschreibbaren Speicher gespeichert. In diesem Fall können die Maximalbelastung und gegebenenfalls die Minimalbelastung durch den Nutzer des Apparates vorgegeben werden und beispielsweise in Abhängigkeit vom durchgeführten Verfahren und gegebenenfalls dem gewünschten Durchsatz eingestellt werden. Alternativ ist es auch möglich, die Maximalbelastung und gegebenenfalls die Minimalbelastung fest vorzugeben. Dies ist zum Beispiel möglich, indem die Maximalbelastung und gegebenenfalls die Minimalbelastung auf einem nicht überschreibbaren Speicher gespeichert werden. Alternativ ist es auch möglich, die Maximalbelastung und gegebenenfalls die Minimalbelastung in diesem Fall als feste Werte in einem Computerprogramm zur Steuerung des Apparates vorzugeben.

Wenn die Maximalbelastung und gegebenenfalls die Minimalbelastung durch den Nutzer einstellbar sind, ist es weiterhin vorteilhaft, wenn zusätzlich eine maximal einstellbare Größe für den Maximalwert vorgegeben wird. Die maximal einstellbare Größe stellt dabei die Maximalbelastung dar, die auf keinen Fall überschritten werden darf. Wenn dann zum Beispiel vom Nutzer eine Maximalbelastung vorgegeben wird, die größer ist als die maximale Größe, kann eine Fehlermeldung ausgegeben werden, so dass die Eingabe korrigiert werden kann. Alternativ ist es auch möglich, in diesem Fall die Maximalbelastung jeweils auf die maximale Größe festzulegen. Auf diese Weise wird vermieden, dass durch die Vorgabe durch den Nutzer eine Maximalbelastung vorgegeben wird, die zu einer Schädigung der Welle führen kann.

In einer weiteren Ausführungsform der Erfindung wird beim nach oben Verschieben der Unterkante der Auslassöffnung eine Wellenbelastung vorgegeben, bis zu deren Erreichen die Unterkante der Auslassöffnung nach oben verschoben wird und/oder die Menge an zugeführtem Material erhöht wird, wobei diese Wellenbelastung kleiner ist als die vorgegebene Maximalbelastung und sofern eine Minimalbelastung vorgegeben ist, größer als die Minimalbelastung. Auf diese Weise wird erzielt, dass die Unterkante der Auslassöffnung nicht bis zum maximal möglichen Punkt nach oben verschoben wird und/oder die maximale Menge an zugeführtem Material eingestellt wird und mit Beenden des Verschiebens nach oben und/oder Erhöhen der Menge an zugeführtem Material bereits die Maximalbelastung überschritten werden kann, so dass es notwendig ist, die Unterkante der Auslassöffnung sofort wieder nach unten zu verschieben und/oder die Menge an zugeführtem Material zu reduzieren. Die Wellenbelastung, bis zu deren Erreichen die Unterkante des Wehres nach oben verschoben wird, kann dabei vorzugsweise in Abhängigkeit vom durchgeführten Verfahren durch den Nutzer vorgegeben werden. Insbesondere lässt sich hierdurch die maximale Füllhöhe des Apparates und damit der maximal gewünschte Durchsatz einstellen.

Der Apparat mit mindestens einer rotierenden Welle, der nach dem erfindungsgemäßen Verfahren betrieben wird, ist vorzugsweise ein Kneter oder ein Schaufeltrockner. Wenn der Apparat ein Kneter ist, so weist dieser vorzugsweise mehr als eine Welle, beispielsweise zwei Wellen auf. Auf den Wellen sind in diesem Fall zum Beispiel Knetbarren angebracht, die so gestaltet sind, dass diese ineinander kämmen. Hierdurch kann ein Kneten des im Apparat enthaltenen Materials erreicht werden. Hierbei ist es auch möglich, die Anzahl der Knetbarren auf den beiden rotierenden Wellen zu variieren und/oder die Wellen mit unterschiedlichen Geschwindigkeiten anzutreiben.

Wenn der Apparat mehr als eine Welle enthält, so werden vorzugsweise für jede der Wellen die Belastungsdaten gemessen. Um Wellenschädigungen zu vermeiden, wird in diesem Fall bereits die Unterkante der Auslassöffnung nach unten verschoben, wenn die Wellenbelastung einer Welle die vorgegebene Maximalbelastung überschreitet.

Wenn der Apparat ein Schaufeltrockner ist, so weist dieser üblicherweise eine rotierende Welle auf. Es ist jedoch auch in diesem Fall möglich, dass der Schaufeltrockner mehr als eine rotierende Welle enthält.

Der Apparat wird in einer besonders bevorzugten Ausführungsform zur Herstellung von Poly(meth)acrylaten eingesetzt. In diesem Fall ist der Apparat zum Beispiel ein Mischkneter, wie er zur Umsetzung der Edukte zum Poly(meth)acrylat eingesetzt wird. Im Schaufeltrockner wird anschließend das im Knetreaktor hergestellte Poly(meth)acrylat getrocknet.

Die so hergestellten Poly(meth)acrylate finden zum Beispiel Einsatz als Superabsorber in Hygieneprodukten.

Ein Ausführungsbeispiel der Erfindung ist in den Figuren dargestellt.

Es zeigen:
- Figur 1: einen Querschnitt durch einen Apparat mit rotierender Welle im Bereich der Auslassöffnung,
- Figur 2: eine schematische Darstellung eines Apparates mit Auslassöffnung mit verschiebbarer Unterkante in Seitenansicht.

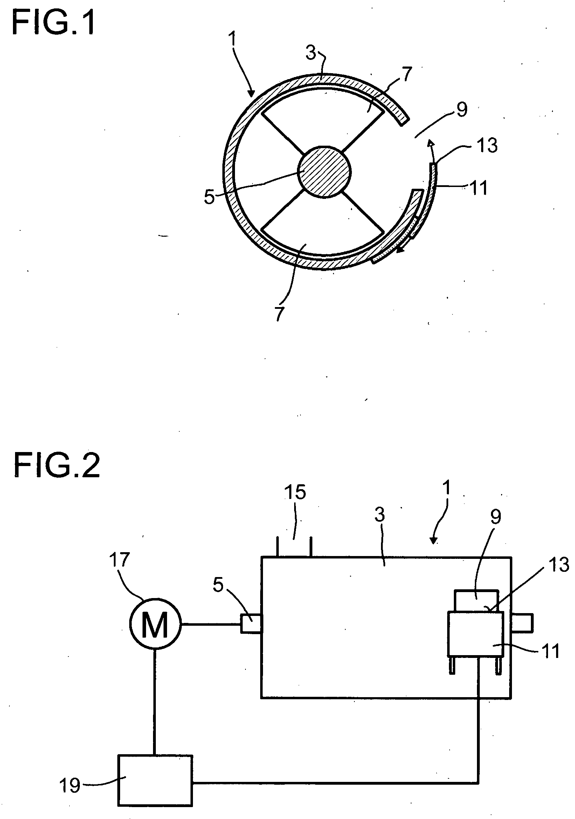

Figur 1 zeigt einen Schnitt durch einen Apparat mit einstellbarer Auslassöffnung im Bereich der Auslassöffnung.

Ein Apparat 1 umfasst ein Gehäuse 3, das eine Welle 5 umschließt. Auf der Welle sind Funktionselemente 7 angebracht. Die Funktionselemente 7 können zum Beispiel wie in der Figur dargestellt, Schaufeln eines Schaufeltrockners sein. Alternativ ist es auch möglich, dass die Funktionselemente zum Beispiel Knetbarren oder Scheiben sind. Wenn die Funktionselemente 7 Scheiben oder Schaufeln sind, so können diese auch als Hohlelemente gestaltet sein und von innen mit einem Temperiermedium durchströmt werden. In diesem Fall ist die Welle 5 vorzugsweise ebenfalls eine Hohlwelle, die von einem Temperiermedium durchströmt wird.

Mit Hilfe der Funktionselemente 7 wird im Apparat 1 Material, das sich im Apparat 1 befindet, umgewälzt oder durchgeknetet und gleichzeitig von einer hier nicht dargestellten Einfüllöffnung zu einer Auslassöffnung 9 transportiert. In der hier dargestellten Ausführungsform ist die Auslassöffnung 9 seitlich im Gehäuse 3 ausgebildet.

Das Gehäuse 3 ist in der hier dargestellten Ausführungsform zylindrisch gestaltet und umschließt die Welle 5 mit den Funktionselementen 7. Durch die zylindrische Gestaltung des Gehäuses 3 wird eine bestmögliche Funktion des Apparates 1 erzielt.

Um die Auslassöffnung 9 einzustellen, weist diese an ihrer Unterkante ein verstellbares Wehr 11 auf. Das verstellbare Wehr 11 ist dabei an die zylindrische Geometrie des Gehäuses 3 angepasst. Es ist jedoch auch jede beliebige andere Gestaltung des Wehres 11 denkbar, die eine Verschiebung der Unterkante 13 der Auslassöffnung 9 ermöglicht.

Sobald die Wellenbelastung eine vorgegebene Maximalbelastung überschreitet, üblicherweise ergibt sich diese bei einer zu großen Füllhöhe, wird die Unterkante 13 des Wehres 11 nach unten verschoben. Hierdurch wird die Auslassöffnung 9 nach unten vergrößert und die Füllhöhe im Apparat 1 sinkt. Dies führt zu einer Verringerung der Belastung der Welle. Wenn die Wellenbelastung einen vorgegebenen Minimalwert unterschreitet, ist es möglich, die Unterkante 13 der Auslassöffnung 9 nach oben zu verschieben und so die Füllhöhe im Apparat 1 zu vergrößern. Dies erlaubt einen vergrößerten Durchsatz und damit eine maximale Auslastung des Apparates 1. Die Verschiebung der Unterkante 13 der Auslassöffnung 9 nach oben sollte beendet werden, bevor die Maximalbelastung der Welle 5 erreicht ist, um eine Schädigung der Welle 5 zu vermeiden.

In Figur 2 ist schematisch ein Apparat mit verschiebbarer Auslassöffnung in Seitenansicht dargestellt.

Neben der Auslassöffnung 9 umfasst der Apparat 1 auch eine Einfüllöffnung 15. Über die Einfüllöffnung 15 wird das im Apparat 1 zu verarbeitende Material zugegeben. Hierbei kann es sich zum Beispiel um zu trocknendes Gut handeln, wenn der Apparat 1 ein Trockner ist oder auch um Edukte oder Materialien, die in einem Kneter miteinander verknetet werden sollen. Wenn der Apparat ein Mischkneter ist, wie er zum Beispiel zur Herstellung von Poly(meth)acrylaten eingesetzt wird, so werden über die Einfüllöffnung 15 die Edukte zugegeben, die zum Poly(meth)acrylat reagieren. Zusätzlich können hier nicht dargestellte weitere Einfüllöffnungen vorgesehen sein, über die zum Beispiel Additive zugegeben werden können.

Um den Apparat 1 betreiben zu können, ist die Welle 5 mit einem Antrieb 17 versehen. Der Antrieb 17 ist üblicherweise ein Elektromotor.

Um die Wellenbelastung zu erfassen, ist es möglich, beispielsweise die Drehzahl des Antriebs 7 oder die Leistung des Antriebs 7 zu erfassen. Diese Daten werden einer Steuereinheit 19 zugeführt. In der Steuereinheit 19 werden die erfassten Daten mit einem vorgegebenen Maximalwert und gegebenenfalls einem vorgegebenen Minimalwert verglichen. Bei Überschreiten des vorgegebenen Maximalwertes wird ein Signal an eine Stelleinheit für das Wehr 11 gesendet und das Wehr 11 wird nach unten bewegt, so dass die Unterkante 13 der Auslassöffnung nach unten bewegt wird. Entsprechend wird bei Unterschreiten eines vorgegebenen Minimalwertes die Unterkante 13 der Auslassöffnung 9 nach oben verschoben, indem das Wehr 11 nach oben verschoben wird. Hierzu wird zum Beispiel von der Steuereinheit 19 ein Signal an eine Stelleinheit gesendet, mit der das Wehr 11 verschoben werden kann.

Auf diese Weise lässt sich jeweils die optimale Füllhöhe im Apparat 1 einstellen, bei der eine Schädigung der Welle noch vermieden werden kann.

### Bezugszeichenliste

- 1: Apparat
- 3: Gehäuse
- 5: Welle
- 7: Funktionselement
- 9: Auslassöffnung
- 11: Wehr
- 13: Unterkante
- 15: Einfüllöffnung
- 17: Antrieb
- 19: Steuereinheit

## Patentansprüche

1. Verfahren zum Betrieb eines Apparates (1) mit mindestens einer rotierenden Welle (5), wobei die mindestens eine rotierende Welle (5) Funktionselemente (7) aufweist, die auf in dem Apparat (1) zu verarbeitendes Material einwirken, wobei der Apparat (1) eine Einfüllöffnung (15) und eine Auslassöffnung (9) mit einer einstellbaren Unterkante (13) aufweist und Material kontinuierlich durch den Apparat (1) von der Einfüllöffnung (15) zur Auslassöffnung (9) gefördert wird, folgende Schritte umfassend:
(a) Messung von Belastungsdaten der mindestens einen rotierenden Welle (5) zur Bestimmung der Wellenbelastung, wobei die Drehzahl der Welle (5), die Motorleistung zum Antrieb der Welle (5) und Durchbiegungswerte der Welle (5) erfasst werden und zur Bestimmung der Durchbiegungswerte der Abstand zwischen den Wellenenden bestimmt wird und aus einer Änderung des Abstandes die Durchbiegung der Welle (5) bestimmt wird,
(b) Absenken der Unterkante (13) der Auslassöffnung (9) und/oder Reduzieren der Menge an zugeführtem Material, wenn die Wellenbelastung eine vorgegebene Maximalbelastung überschreitet oder Verschieben der Unterkante (13) der Auslassöffnung (9) nach oben und/oder Erhöhen der Menge an zugeführtem Material, wenn die Wellenbelastung kleiner als eine vorgegebene Wellenbelastung ist.

2. Verfahren gemäß Anspruch 1, **dadurch gekennzeichnet, dass** die Unterkante (13) der Auslassöffnung (9) durch ein verschiebbares Wehr gebildet wird und zum Absenken der Unterkante (13) der Auslassöffnung (9) das Wehr (11) nach unten bewegt wird und zur Verschiebung der Unterkante (13) der Auslassöffnung (9) nach oben das Wehr (11) nach oben bewegt wird.

3. Verfahren gemäß Anspruch 1 oder 2, **dadurch gekennzeichnet, dass** die Maximalbelastung und die vorgegebene Wellenbelastung, bis zu deren Erreichen die Unterkante (13) der Auslassöffnung (9) nach oben verschoben wird und/oder die Menge an zugeführtem Material erhöht wird, in einer Steuereinheit (19) zur Einstellung der Unterkante (13) der Auslassöffnung (9) gespeichert ist.

4. Verfahren gemäß einem der Ansprüche 1 bis 3, **dadurch gekennzeichnet, dass** der Apparat (1) mit mindestens einer rotierenden Welle (5) ein Kneter oder ein Schaufeltrockner ist.

5. Verfahren gemäß einem der Ansprüche 1 bis 4, **dadurch gekennzeichnet, dass** der Apparat (1) zur Herstellung von Poly(meth)acrylaten eingesetzt wird.

## Claims

1. A method for operating an apparatus (1) with at least one rotating shaft (5), the at least one rotating shaft (5) comprising functional elements (7) which act on material to be processed in the apparatus (1), the apparatus (1) comprising a filling orifice (15) and an outlet orifice (9) with an adjustable lower edge (13), and material being conveyed continuously through the apparatus (1) from the filling orifice (15) to the outlet orifice (9), said method comprising the following steps:
(a) measuring load data for the at least one rotating shaft (5) in order to determine shaft load, the rotational speed of the shaft (5), the motor power for driving the shaft (5) and shaft (5) deflection values being detected and the deflection values being determined by determining the distance between the shaft ends and the deflection of the shaft (5) being determined on the basis of a change in said distance,
(b) lowering the lower edge (13) of the outlet orifice (9) and/or reducing the quantity of material supplied if the shaft load exceeds a specified maximum load, or displacing the lower edge (13) of the outlet orifice (9) upwards and/or increasing the quantity of material supplied if the shaft load is less than a specified shaft load.

2. The method according to claim 1, wherein the lower edge (13) of the outlet orifice (9) is formed by a displaceable weir and, in order to lower the lower edge (13) of the outlet orifice (9), the weir (11) is moved downwards and, in order to displace the lower edge (13) of the outlet orifice (9) upwards, the weir (11) is moved upwards.

3. The method according to claim 1 or 2, wherein the maximum load and the specified shaft load, up to which the lower edge (13) of the outlet orifice (9) is displaced upwards and/or the quantity of material supplied is increased, is stored in a control unit (19) for adjusting the lower edge (13) of the outlet orifice (9).

4. The method according to one of claims 1 to 3,
wherein the apparatus (1) with at least one rotating shaft (5) is a kneader or a paddle dryer.

5. The method according to one of claims 1 to 4,
wherein the apparatus (1) is used for producing poly(meth)acrylates.

## Revendications

1. Procédé d'exploitation d'un appareil (1) comprenant au moins un arbre rotatif (5), ledit au moins un arbre rotatif (5) comprenant des éléments fonctionnels (7), qui agissent sur un matériau à usiner dans l'appareil (1), l'appareil (1) comprenant une ouverture de remplissage (15) et une ouverture de déchargement (9) à bord inférieur ajustable (13), et le matériau étant transporté en continu dans l'appareil (1) depuis l'ouverture de remplissage (15) jusqu'à l'ouverture de déchargement (9), comprenant les étapes suivantes :
(a) la mesure de données de chargement dudit au moins un arbre rotatif (5) pour déterminer le chargement de l'arbre ; la vitesse de rotation de l'arbre (5), la puissance du moteur pour l'entraînement de l'arbre (5) et la valeur de flexion de l'arbre (5) étant comprises, et, pour déterminer la valeur de flexion, l'écart entre les extrémités de l'arbre étant déterminé et la flexion de l'arbre (5) étant déterminée par une modification de l'écart,
(b) l'abaissement du bord inférieur (13) de l'ouverture de déchargement (9) et/ou la réduction de la quantité de matériau introduit lorsque le chargement de l'arbre dépasse un chargement maximal prédéterminé ou le décalage du bord inférieur (13) de l'ouverture de sortie (9) vers le haut et/ou l'augmentation de la quantité de matériau introduit lorsque le chargement de l'arbre est inférieur à un chargement de l'arbre prédéterminé.

2. Procédé selon la revendication 1, **caractérisé en ce que** le bord inférieur (13) de l'ouverture de déchargement (9) est formé par un barrage décalable et, pour l'abaissement du bord inférieur (13) de l'ouverture de déchargement (9), le barrage (11) est déplacé vers le bas et, pour le décalage du bord inférieur (13) de l'ouverture de déchargement (9) vers le haut, le barrage (11) est déplacé vers le haut.

3. Procédé selon la revendication 1 ou 2, **caractérisé en ce que** le chargement maximal et le chargement de l'arbre prédéterminé jusqu'auquel le bord inférieur (13) de l'ouverture de déchargement (9) est décalé vers le haut et/ou la quantité de matériau introduit est augmentée, sont stockés dans une unité de commande (19) pour l'ajustement du bord inférieur (13) de l'ouverture de déchargement (9).

4. Procédé selon l'une quelconque des revendications 1 à 3, **caractérisé en ce que** l'appareil (1) comprenant au moins un arbre rotatif (5) est un malaxeur ou un séchoir à pales.

5. Procédé selon l'une quelconque des revendications 1 à 4, **caractérisé en ce que** l'appareil (1) est utilisé pour la fabrication de poly(méth)acrylates.
